# EUROPEAN PATENT SPECIFICATION

(11) **EP 2 750 972 B1**
(45) Date of publication and mention of the grant of the patent: **02.08.2017**
(21) Application number: 11757492.1
(22) Date of filing: 02.09.2011
(51) Int. Cl.: B64D 33/02, B64D 27/00, B64D 27/26

(54) **MOTION RESTRICTOR SYSTEM FOR AN AIRCRAFT ENGINE**
BEWEGUNGSBEGRENZERSYSTEM FÜR EIN FLUGZEUGTRIEBWERK
SYSTÈME DE RESTRICTION DE MOUVEMENT POUR UN MOTEUR D'AÉRONEF

(43) Date of publication of application: 09.07.2014
(73) Proprietor: The Boeing Company, Chicago, IL 60606-1596 (US)
(72) Inventor: STANESCU, Adrian, Maple Valley, Washington 98038 (US); MAHANIAN, Saba, Issaquah, Washington 98027 (US)
(74) Representative: Morrall, Jonathan Ian McLachlan
(86) International application number: PCT/US2011/050447
(87) International publication number: WO 2013/032490

(56) References cited:
- WO-A2-2010/007226
- FR-A1- 2 942 457
- US-A- 4 044 973
- US-A1- 2010 084 507

## Description

### BACKGROUND INFORMATION

### Field:

The present disclosure relates generally to aircraft and, in particular, to aircraft engines. Still more particularly, the present disclosure relates to a method and apparatus for reducing vibrations in an inlet of an aircraft engine.

### Background:

An aircraft engine is a component of a propulsion system for an aircraft that generates mechanical power to move the aircraft. Aircraft engines may take many different forms, depending on the type of aircraft in which they are used. For example, aircraft may use engines in the form of a turboprop, a turbojet, a turbofan, and other suitable types of engines.

Many commercial aircraft use jet engines in the form of a turbofan. A turbofan is a type of jet engine that provides thrust using a combination of a ducted fan and a jet exhaust nozzle. These types of engines have rotating shafts or spools.

Vibrations from these and other components may be undesirable with respect to the ride and comfort of passengers or may affect the durability of engine parts. For example, vibrations may also limit the speed at which the components may rotate. Further, when vibrations occur, maintenance for these types of engines may be needed more often than desired.

Therefore, it would be advantageous to have a method and apparatus that takes into account at least some of the issues discussed above, as well as possibly of other issues.

FR 2942457 discloses a jet engine nacelle comprising an air intake structure for channeling a flow of air to a turbojet fan, a central structure attached to the air inlet structure and intended to surround the fan of the turbojet engine, the air intake structure comprising an inner panel secured to the central structure and a fixed structure forming therewith, and an outer panel including a lip air input at its end opposite to the middle structure, the outer panel being movable in longitudinal translation relative to the inner panel.

### SUMMARY

According to an aspect, there is provided an apparatus as defined in claim 1. According to another aspect, there is provided a method for reducing vibrations in an inlet of an aircraft engine as defined in claim 13. In one advantageous embodiment, an apparatus comprises a first wall and a plurality of longitudinal members. The first wall is for an inlet of an aircraft engine. The plurality of longitudinal members connects the first wall to a structure for the aircraft engine. The plurality of longitudinal members has an orientation configured to reduce motion in the inlet, wherein the motion reduced in the inlet is in an axial direction of the aircraft engine.

In an example, a motion restrictor system for an inlet of an aircraft engine comprises a structure, an inlet, and a plurality of longitudinal members. The structure is in the aircraft engine. The inlet is connected to the aircraft engine. The plurality of longitudinal members has first ends connected to a wall of the inlet and second ends connected to the structure. Motion in an axial direction in the wall of the inlet caused by the structure is reduced.

In yet another advantageous embodiment, a method for reducing vibrations in an inlet of an aircraft engine is provided. The aircraft engine is operated such that vibrations are generated. The vibrations in the inlet are reduced with a plurality of longitudinal members connecting a first wall of the inlet to a second wall of a structure for the aircraft engine. The plurality of longitudinal members has an orientation configured to reduce the vibration in the inlet, wherein the motion reduced in the inlet is in an axial direction of the aircraft engine.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:
Figure 1 is an illustration of a block diagram of a motion restriction environment in which an advantageous embodiment may be implemented;
Figure 2 is an illustration of an aircraft in accordance with an advantageous embodiment;
Figure 3 is a more-detailed illustration of an engine in accordance with an advantageous embodiment;
Figure 4 is an illustration of an engine in accordance with an advantageous embodiment;
Figure 5 is a view of an inlet in accordance with an advantageous embodiment;
Figure 6 is an exposed view of an inlet in accordance with an advantageous embodiment;
Figure 7 is an illustration of a longitudinal member connected to a wall of an inlet in accordance with an advantageous embodiment;
Figure 8 is a more-detailed illustration of a portion of a longitudinal member connected to a wall of an inlet in accordance with an advantageous embodiment;
Figure 9 is another view of a longitudinal member with a connector system in accordance with an advantageous embodiment;
Figure 10 is an illustration of a longitudinal member in accordance with an advantageous embodiment;
Figure 11 is another view of a longitudinal member in accordance with an advantageous embodiment;
Figure 12 is another illustration of an inlet with a motion restriction system in accordance with an advantageous embodiment;
Figure 13 is a more-detailed view of a portion of an inlet with a longitudinal member in accordance with an advantageous embodiment;
Figure 14 is another illustration of an inlet with a motion restriction system in accordance with an advantageous embodiment;
Figure 15 is an illustration of an inlet with a motion restriction system in accordance with an advantageous embodiment;
Figure 16 is an illustration of a flowchart of a process for reducing vibrations in an inlet of an aircraft engine in accordance with an advantageous embodiment;
Figure 17 is an illustration of an aircraft manufacturing and service method in accordance with an advantageous embodiment; and
Figure 18 is an illustration of an aircraft in which an advantageous embodiment may be implemented.

### DETAILED DESCRIPTION

The different advantageous embodiments recognize and take into account one or more different considerations. For example, the different advantageous embodiments recognize and take into account that the rotating shaft and spools may contribute to the vibrations. These vibrations may extend into the housing and through other components in the engine.

The different advantageous embodiments recognize and take into account that different mechanisms are currently used to reduce vibrations in a radial direction. In other words, mechanisms are currently available for reducing vibrations in a direction substantially perpendicular to an axis extending through the rotating shaft in the engine.

The different advantageous embodiments also recognize and take into account that other types of vibrations may be present that may be undesirable. For example, the different advantageous embodiments recognize and take into account that the different portions of an inlet attached to the housing of an engine may move back and forth in an axial direction. This motion may be caused by vibrations in other parts of the engine, such as the fan and spools. This axial direction is in the same direction as an axis extending through a shaft of the engine.

The different advantageous embodiments recognize and take into account that this type of vibration in the axial direction may cause inconsistencies to occur in the inlet more quickly than desired. As a result, the inlet may need maintenance, rework, or replacement more often than desired.

Thus, the different advantageous embodiments recognize and take into account that reducing vibrations for the inlet in an axial direction may be desirable.

In one advantageous embodiment, an apparatus comprises a first wall for an inlet of an aircraft engine. The apparatus also comprises a plurality of longitudinal members. The plurality of longitudinal members connects the first wall to a second wall of the structure for the aircraft engine. The plurality of longitudinal members has an orientation configured to reduce motion, such as vibrations, in the first wall. These walls may take the form of bulkheads in some illustrative examples.

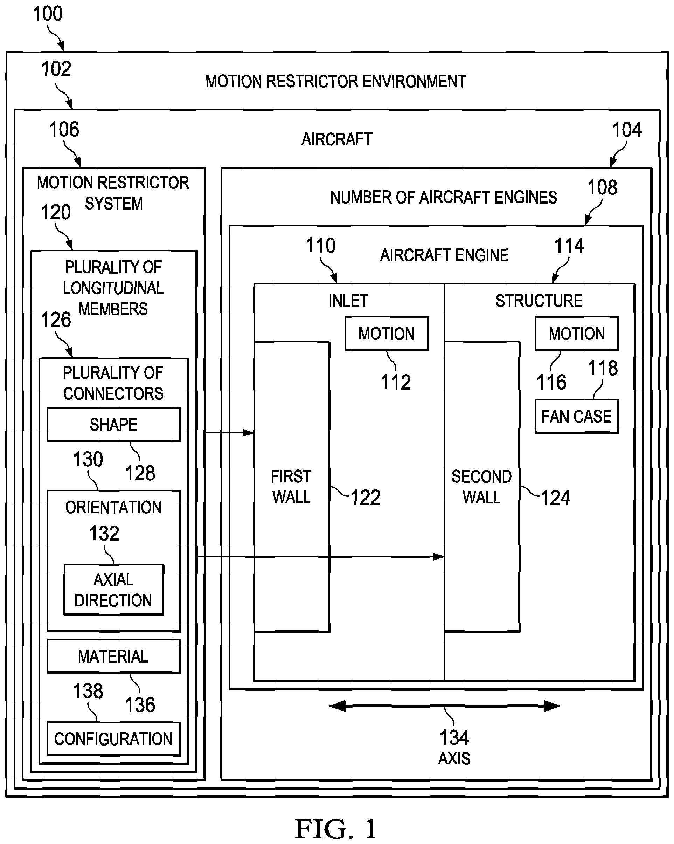

With reference now to the figures and particularly with reference to Figure 1, an illustration of a block diagram of a motion restrictor environment is depicted in accordance with an advantageous embodiment. In this illustrative example, motion restrictor environment 100 includes aircraft 102. Aircraft 102 includes number of aircraft engines 104. As used herein, a number, when used with reference to an item, means one or more items. For example, a number of engines may be one or more engines.

In these illustrative examples, motion restrictor system 106 may be implemented in aircraft engine 108 in any of number of aircraft engines 104. Motion restrictor system 106 may be installed or added to aircraft engine 108 at different times. For example, motion restrictor system 106 may be included in aircraft engine 108 during construction of aircraft engine 108. In another illustrative example, motion restrictor system 106 may be added to aircraft engine 108 during maintenance, refurbishment, or other operations with respect to aircraft engine 108.

In these illustrative examples, motion restrictor system 106 may be used to reduce motion 112 in inlet 110 of aircraft engine 108. Inlet 110 is attached to structure 114.

Motion 116 generated by structure 114 during operation of aircraft engine 108 may cause motion 112 in inlet 110. In these illustrative examples, motion 112 and motion 116 take the form of vibrations.

Structure 114 may be any structure to which inlet 110 is connected. For example, structure 114 may be fan case 118 for aircraft engine 108. In these illustrative examples, motion 112 may cause inlet 110 to form inconsistencies or require replacement more often than desired.

As a result, motion 112 may be reduced in these illustrative examples through the use of motion restrictor system 106. Motion restrictor system 106 comprises plurality of longitudinal members 120. Plurality of longitudinal members 120 connects first wall 122 in inlet 110 to second wall 124 in structure 114. A longitudinal member in plurality of longitudinal members 120 is a structure that is configured to extend from one component to another component, such as first wall 122 to second wall 124, and connect the components to each other.

As used herein, a first component "connected to" a second component means that the first component can be connected directly or indirectly to the second component. For example, the first component may be first wall 122, and the second component may be second wall 124. In other words, additional components may be present between the first component and the second component. In this illustrative example, plurality of longitudinal members 120 are examples of additional components that connect the first component, first wall 122, to the second component, second wall 124. The first component is considered to be indirectly connected to the second component when one or more additional components are present between the two components. When the first component is directly connected to the second component, no additional components are present between the two components.

In these illustrative examples, plurality of longitudinal members 120 may be indirectly connected to second wall 124. For example, plurality of connectors 126 may connect plurality of longitudinal members 120 to second wall 124. As another example, plurality of longitudinal members 120 may be connected to another structure in inlet 110 that may be connected to second wall 124. These structures may take the form of bulkheads in some illustrative examples.

In these illustrative examples, plurality of longitudinal members 120 has shape 128 and orientation 130. At least one of shape 128 and orientation 130 is configured to reduce motion 112 of inlet 110. Motion 112 may be used when plurality of longitudinal members 120 are connected to first wall 122 and second wall 124. In particular, motion 112 may be reduced for first wall 122 in inlet 110.

As used herein, the phrase "at least one of", when used with a list of items, means different combinations of one or more of the listed items may be used and only one of each item in the list may be needed. For example, "at least one of item A, item B, and item C" may include, for example, without limitation, item A or item A and item B. This example also may include item A, item B, and item C, or item B and item C.

In these illustrative examples, shape 128 for plurality of longitudinal members 120 may take a number of different forms. For example, any longitudinal member may have any geometric shape, such as an I-beam, a beam, a T-section, a web, a C-channel, a rod, a cylinder, a closed structure, an open section, a closed section, and/or other suitable shapes.

Orientation 130 is an axial direction 132. Axial direction 132 is in the same direction as axis 134 extending centrally through aircraft engine 108 in these illustrative examples.

Further, plurality of longitudinal members 120 is comprised of material 136. Material 136 also may be selected as one that may aid in reducing motion 112 for first wall 122. Further, material 136 may be selected as one that may withstand operational vibration of aircraft engine 108 for a desired period of time without causing any of plurality of longitudinal members 120 to change shape 128 in an undesired manner. Material 136 may be, for example, at least one of aluminum, a composite material, titanium, steel, a metal alloy, and other suitable types of material.

Further, in these illustrative examples, plurality of connectors 126 are connected to first wall 122 and second wall 124 in configuration 138. In the depicted examples, plurality of connectors 126 is spaced apart from each other by substantially an equal amount of spacing. In other words, two longitudinal members may be spaced apart at a distance that is substantially equal to the spacing between two other longitudinal members in the plurality of longitudinal members. The spacing may be around the circumference of the inlet. For example, if four longitudinal members are present in plurality of longitudinal members 120, configuration 138 may be a spacing of about 90 degrees around inlet 110.

The illustration of motion restrictor environment 100 in Figure 1 is not meant to imply physical or architectural limitations to a manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment.

For example, in still other illustrative examples, plurality of longitudinal members 120 may comprise two longitudinal members, three longitudinal members, five longitudinal members, eight longitudinal members, or some other suitable number of longitudinal members. Further, configuration 138 may not include having substantially the same distance between longitudinal members in plurality of longitudinal members 120, depending on the design of inlet 110. In some cases, features or structures in inlet 110 may result in a different spacing for some longitudinal members within plurality of longitudinal members 120.

In this manner, motion restrictor system 106 may reduce motion 112. The reduction of motion 112 may reduce a development of inconsistencies in inlet 110. Further, maintenance in inlet 110 may be reduced with the use of motion restrictor system 106 with inlet 110.

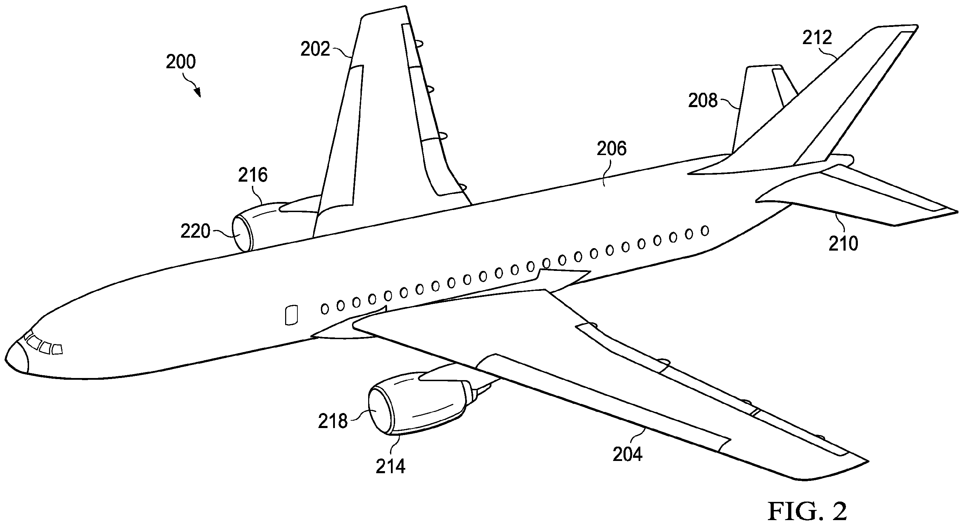

With reference to Figures 2-15, illustrations of physical implementations for components, such as an aircraft, an engine, an inlet, and components for a motion restrictor system are depicted in accordance with an advantageous embodiment. In these illustrative examples, the different components shown in these figures may be combined with the components in Figure 2, using components in Figure 2, or a combination of the two. Additionally, some of the components shown in these figures may be illustrative examples of how components in block form in Figure 1 may be implemented as physical structures.

Turning next to Figure 2, an illustration of an aircraft is depicted in accordance with an advantageous embodiment. Aircraft 200 is an example of a physical implementation for aircraft 102 illustrated in block form in Figure 1.

As depicted, aircraft 200 has wing 202 and wing 204 attached to fuselage 206. Aircraft 200 also has horizontal stabilizer 208, horizontal stabilizer 210 and vertical stabilizer 212. Engine 214 is attached to wing 204, and engine 216 is attached to wing 202. Engine 214 and engine 216 are examples of physical implementations for number of aircraft engines 104 illustrated in block form in Figure 1.

In these illustrative examples, one or more advantageous embodiments may be implemented in engine 214 and engine 216. In particular, motion restrictor system 106 in Figure 1 may be implemented for use with at least one of inlet 218 for engine 214 and inlet 220 for engine 216.

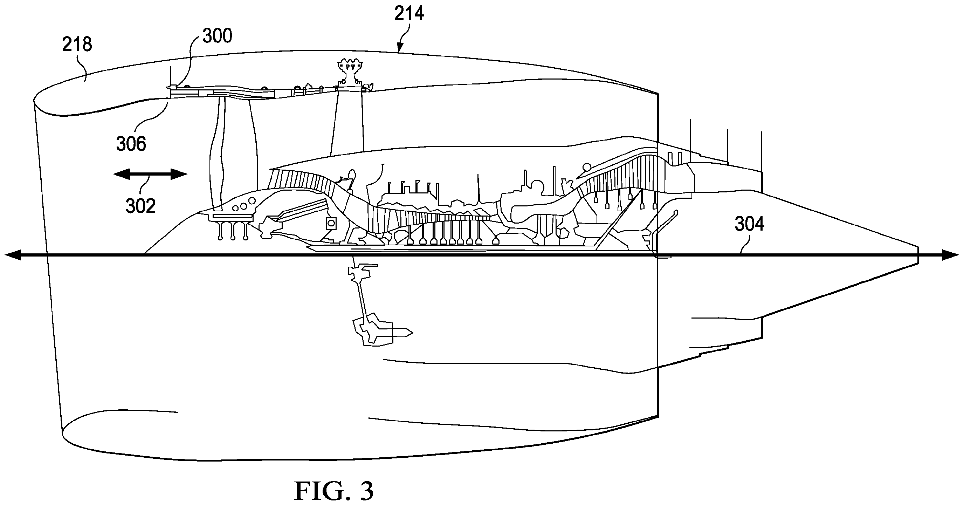

With reference now to Figure 3, a more-detailed illustration of an engine is depicted in accordance with an advantageous embodiment. In this figure, a partially-exposed view of engine 214 is illustrated.

As depicted, inlet 218 is connected to fan case 300 for engine 214 in this exposed view. Fan case 300 is an example of a physical implementation for fan case 118 illustrated in block form in Figure 1.

In these illustrative examples, undesired motion may occur in axial direction 302 with respect to inlet 218. Axial direction 302 is a direction corresponding to the direction of axis 304. In these illustrative examples, inlet 218 may be connected to fan case 300 at locations, such as location 306. Motion in fan case 300 may be in axial direction 302, which causes movement of components in inlet 218 in axial direction 302.

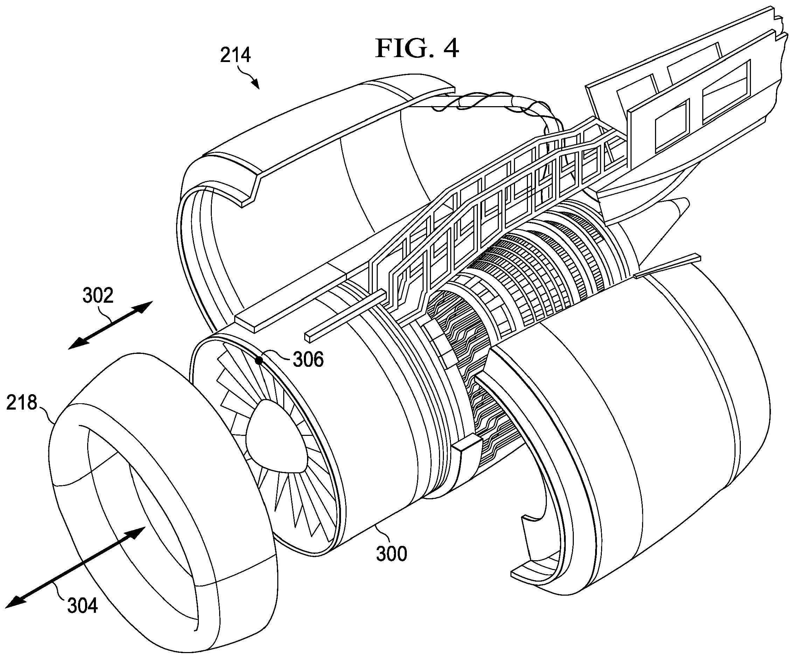

With reference next to Figure 4, another illustration of an engine is depicted in accordance with an advantageous embodiment. In this illustrative example, engine 214 is shown in an exploded view.

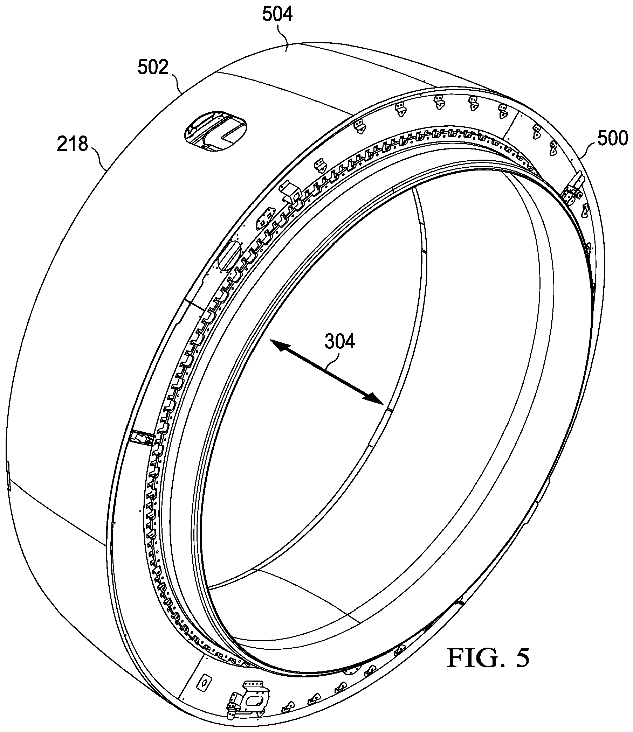

With reference next to Figure 5, an illustration of a view of an inlet is depicted in accordance with an advantageous embodiment. In this illustrative example, wall 500 of inlet 218 is seen in this perspective view. Wall 500 may be attached to fan case 300 in Figure 3.

In these illustrative examples, a motion restrictor system may be implemented for use with inlet 218 to reduce motion in inlet 218. In particular, motion may be reduced for wall 502. The motion restrictor system may be implemented inside of inlet 218 under cover 504. Cover 504 may take the form of an outer cowl for inlet 218.

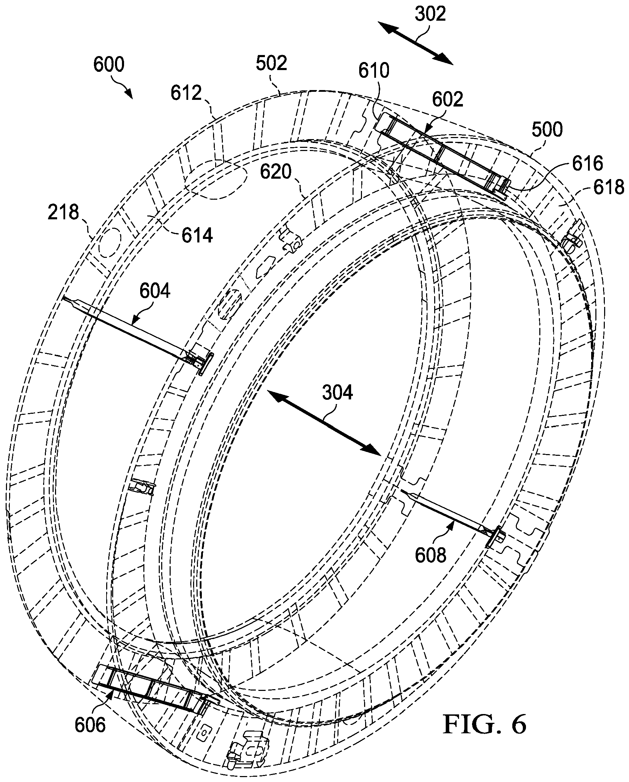

With reference next to Figure 6, an illustration of an exposed view of an inlet is depicted in accordance with an advantageous embodiment. In this illustrative example, motion restrictor system 600 is shown connected to inlet 218.

As depicted in this illustrative example, motion restrictor system 600 comprises longitudinal member 602, longitudinal member 604, longitudinal member 606, and longitudinal member 608 in these illustrative examples. These longitudinal members are spaced apart from each other with substantially the same space.

For example, the longitudinal members may be spaced apart from each other about 90 degrees with respect to axis 304 extending centrally through inlet 218. Longitudinal members 602, 604, 606, and 608 are oriented in a manner that may reduce motion of wall 502 in axial direction 302.

In these illustrative examples, the orientation of longitudinal members 602, 604, 606, and 608 are not aligned in axial direction 302. Instead, these longitudinal members are oriented such that they extend in a direction that has an angle with respect to axis 304. The angle for the longitudinal members is selected to reduce motion of inlet 218 in axial direction 302.

In these examples, the motion takes the form of vibrations that may travel through a structure, such as fan case 300, to inlet 218 during the operation of engine 214. In these illustrative examples, longitudinal members 602, 604, 606, and 608 take the form of I-beams. In other words, these longitudinal members have a cross-sectional shape in the shape of an I-beam.

In this example, the longitudinal members are angled in orientation in inlet 218 with respect to axis 304. More specifically, end 610 of longitudinal member 602 is shown as being connected closer to outer edge 612 as compared to inner edge 614 of wall 502. This location may be selected based on where the most motion is expected in wall 502. The selection of the location is made to reduce motion in wall 502 as much as possible.

End 616 of longitudinal member 602 is located closer to inner edge 618 of wall 500 as compared to outer edge 620 of wall 500. This location is selected such that end 616 may be connected to another structure in engine 214. In this example, the structure is selected as one that is the source of the motion that occurs in inlet 218. This structure may be, for example, fan case 300 in Figure 3.

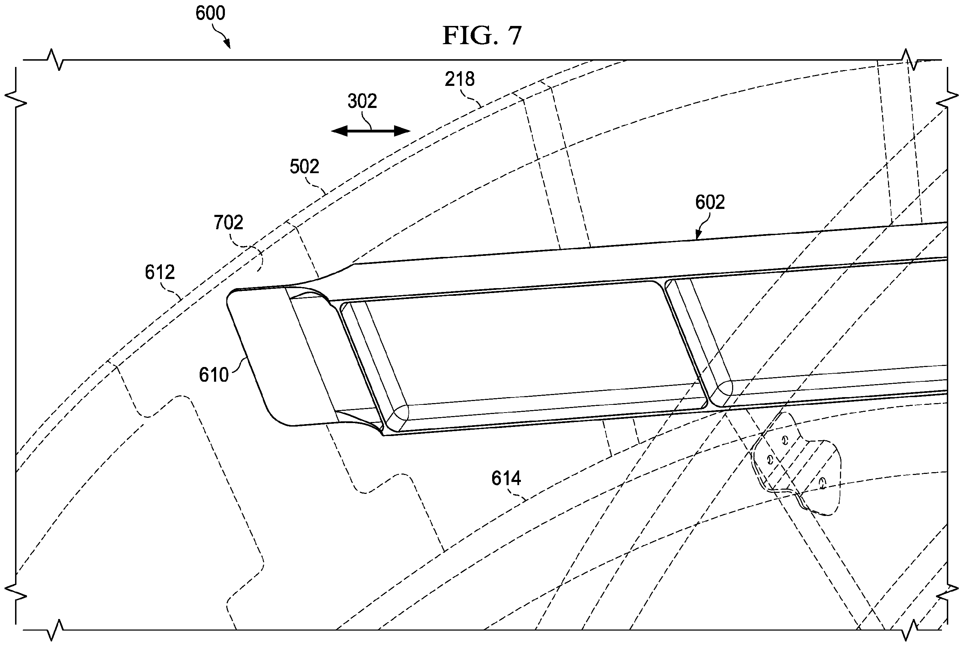

With reference now to Figure 7, an illustration of a longitudinal member connected to a wall of an inlet is depicted in accordance with an advantageous embodiment. In this illustrative example, end 610 of longitudinal member 602 is connected to wall 502 of inlet 218. In particular, end 610 of longitudinal member 602 is connected indirectly to wall 502 through flange 702 extending from wall 502 of inlet 218.

In these illustrative examples, end 610 of longitudinal member 602 may be connected to flange 702 in a number of different ways. For example, end 610 may be connected to flange 702 by one of a weld, a fastener, and/or other suitable mechanisms. As another illustrative example, a fastening or connector system also may be used to connect end 610 to flange 702. Also, end 610 may be connected directly to wall 502.

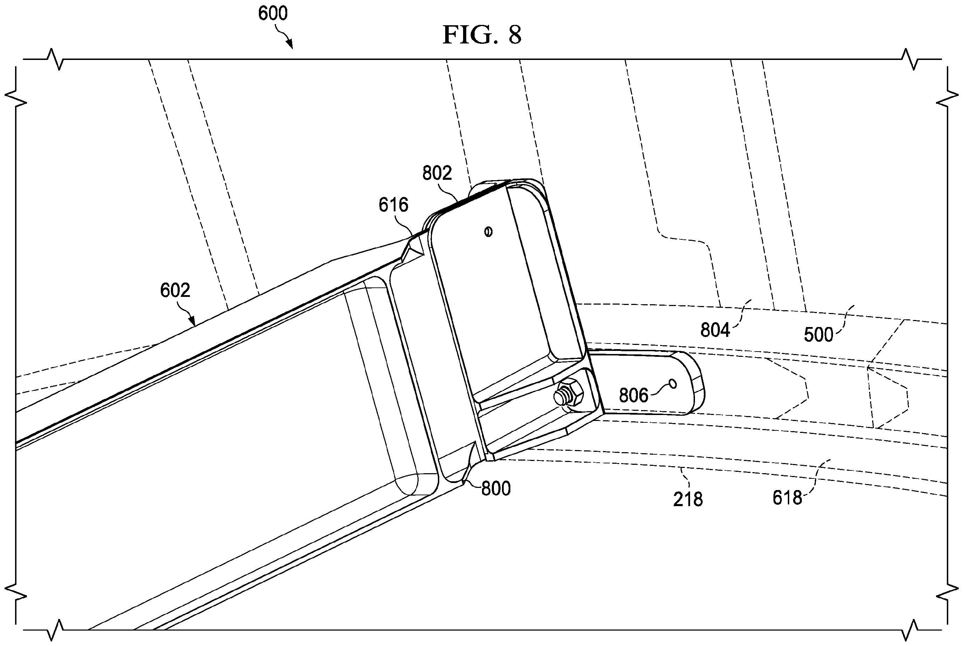

With reference now to Figure 8, a more-detailed illustration of a portion of a longitudinal member connected to a wall of an inlet is depicted in accordance with an advantageous embodiment. In this illustrative example, end 800 may be connected to a structure (not shown) in the engine, such as an engine case.

In this illustrative example, the connection to the structure may be made indirectly through wall 500 of inlet 218. Further, the connection may be made using connector system 802. Connector system 802 is connected to end 616 of longitudinal member 602. In turn, connector system 802 touches surface 804 of wall 500.

Fasteners may be used to connect connector system 802 to both wall 500 and to fan case 300 in Figure 3. In this manner, end 616 of longitudinal member 602 may be connected to fan case 300. This connection is an indirect connection through wall 500 in the illustrative example. In this example, a fastener may be placed though opening 806 in connector system 802.

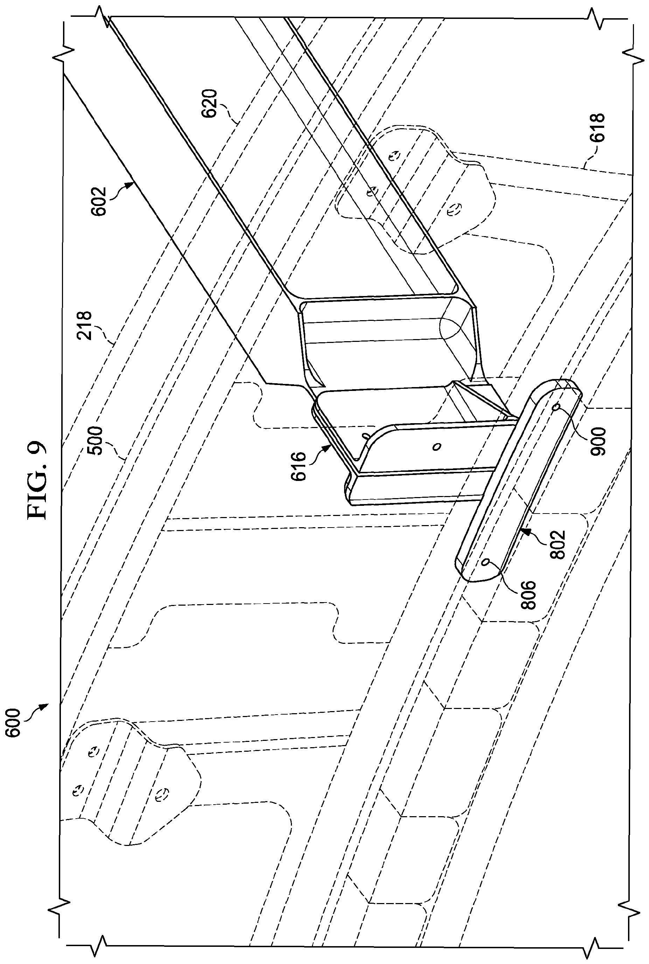

With reference now to Figure 9, another view of a longitudinal member with a connector system is depicted in accordance with an advantageous embodiment. In this illustrative example, opening 900 also may be seen in addition to opening 806 in connector system 802. Opening 806 and opening 900 may receive fasteners that connect connector system 802 to fan case 300 in Figure 3 in these illustrative examples. In particular, the connection may be to a wall (not shown) of fan case 300.

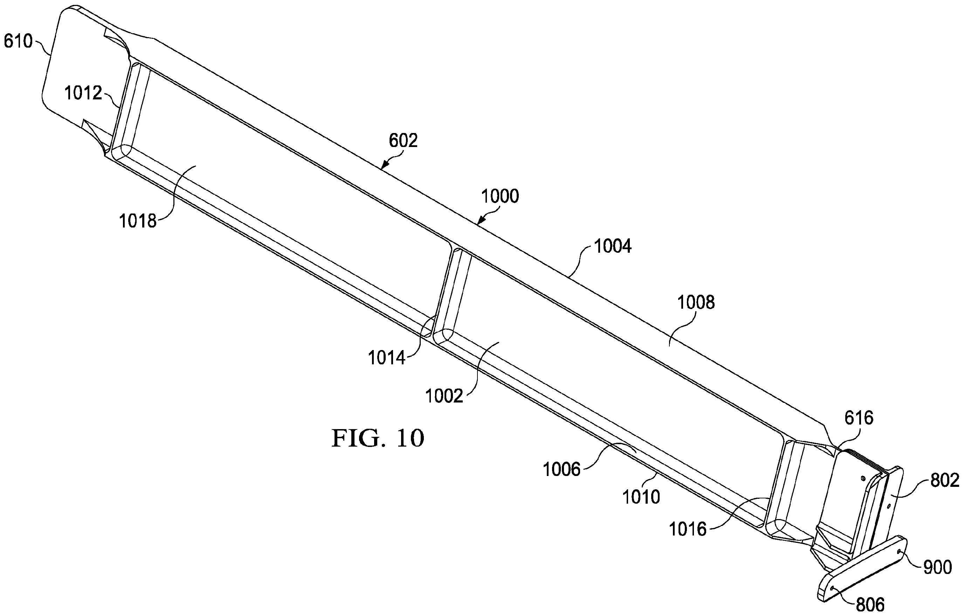

With reference now to Figure 10, an illustration of a longitudinal member is depicted in accordance with an advantageous embodiment. In this illustrative example, longitudinal member 602 is I-beam 1000. I-beam 1000 comprises substantially planar structure 1002 with flange 1004 and flange 1006 on side 1008 and side 1010, respectively, of substantially planar structure 1002. In addition, I-beam 1000 also may include flange 1012, flange 1014, and flange 1016, which extends substantially perpendicular from surface 1018 of substantially planar structure 1002.

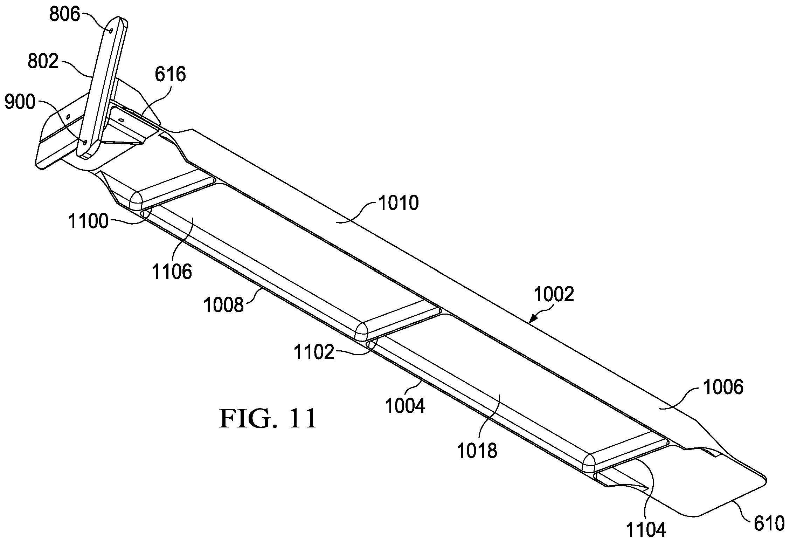

With reference now to Figure 11, another view of a longitudinal member is depicted in accordance with an advantageous embodiment. In this illustrative example, flange 1100, flange 1102, and flange 1104 can be seen extending substantially perpendicular from surface 1106 of substantially planar structure 1002. In the depicted examples, end 610 and end 616 are tapered. The ends may have this shape to reduce weight. The shape may also be selected to maintain a desired level of strength for longitudinal member 606 in Figure 6.

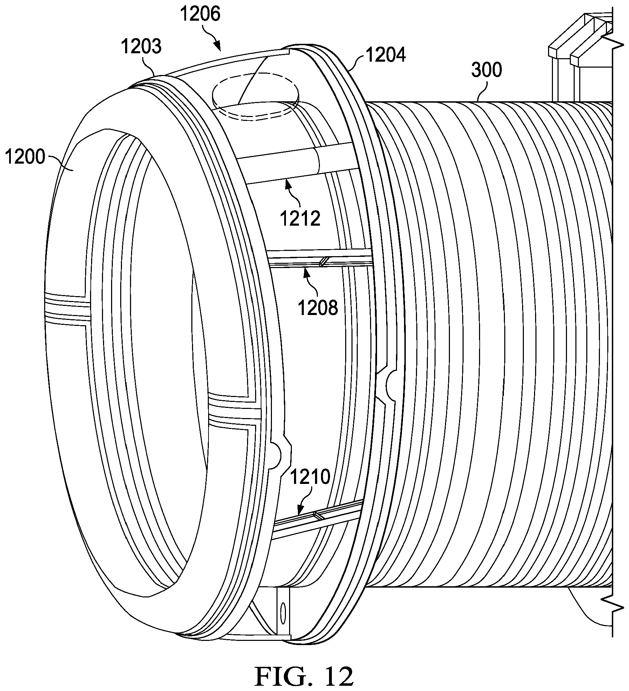

With reference now to Figure 12, another illustration of an inlet with a motion restrictor system is depicted in accordance with an advantageous embodiment. Inlet 1200 is an example of an implementation for inlet 110 in Figure 1.

In this illustrative example, inlet 1200 is connected to fan case 300. Inlet 1200 may be used in place of inlet 218 in Figure 2. Inlet 1200 is shown in an exposed view in this depicted example.

Inlet 1200 has wall 1203 and wall 1204. These walls also may be referred to as bulkheads in some cases. Wall 1204 of inlet 1200 is connected to fan case 300.

Additionally, inlet 1200 also has motion restrictor system 1206 in this illustrative example. Four longitudinal members connect wall 1203 of inlet 1200 to fan case 300, two of which can be seen in this view. Longitudinal member 1208 and longitudinal member 1210 can be seen in about a two o'clock and about a four o'clock position. Additionally, two longitudinal members are present in about a ten o'clock and about an eight o'clock position that are not seen in this view.

Further, additional longitudinal members may be present that connect wall 1203 to fan case 300. In this illustrative example, wall 1204 is located between the longitudinal members and fan case 300.

In this illustrative example, longitudinal member 1212 can be seen in about a one o'clock position. Of course, additional longitudinal members also may be present at the eleven o'clock position and/or other positions, depending on the particular implementation. These longitudinal members connecting wall 1203 to wall 1204 may provide an additional reduction in motion in inlet 1200 in addition to longitudinal members connecting wall 1203 to fan case 300.

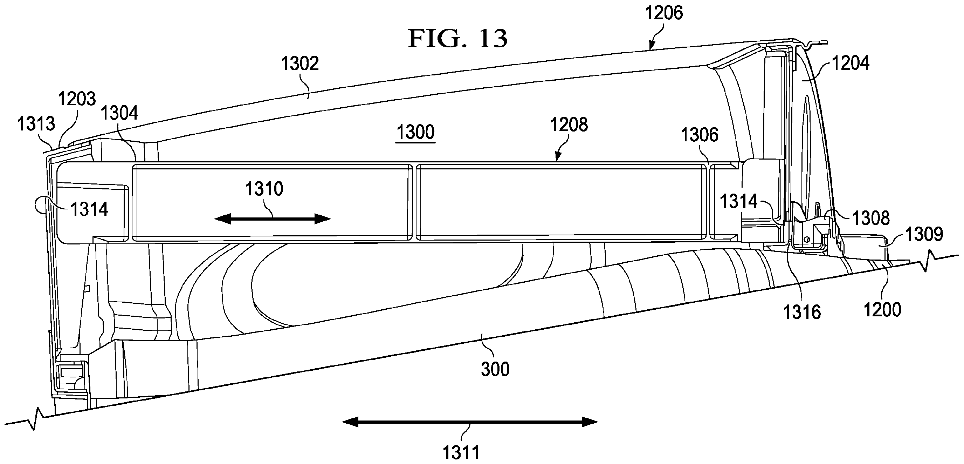

With reference now to Figure 13, a more-detailed view of a portion of an inlet with a longitudinal member is depicted in accordance with an advantageous embodiment. In this illustrative example, a more-detailed view of longitudinal member 1208 within inlet 1200 is depicted in accordance with an advantageous embodiment.

As can be seen, longitudinal member 1208 is shown within interior 1300 of inlet 1200. In this illustrative example, cover 1302 is illustrated on inlet 1200.

In this illustrative example, end 1304 of longitudinal member 1208 is connected to wall 1203 of inlet 1200. End 1306 of longitudinal member 1208 is connected to inlet attach ring 1308 located on wall 1309 of fan case 300. As depicted, this connection is an indirect connection via wall 1204 of inlet 1200.

As can be seen, longitudinal member 1208 extends along direction 1310. However, within inlet 1200, longitudinal member 1208 has a diagonal or angled position with respect to wall 1203 and wall 1204.

In these illustrative examples, this angled-position longitudinal member 1208 extends in direction 1310. Direction 1310 has an angle with respect to axis 1311 of inlet 1200. In other words, the angled position selected to reduce motion of inlet 1200 is in the direction of axis 1311 of inlet 1200.

In particular, end 1304 of longitudinal member 1208 is connected closer to outer edge 1313 of wall 1203 than inner edge 1314 of wall 1203 for inlet 1200. End 1306 of longitudinal member 1208 is connected to inner edge 1314 of wall 1204. Inner edge 1314 is located approximate to outer edge 1316 of wall 1204.

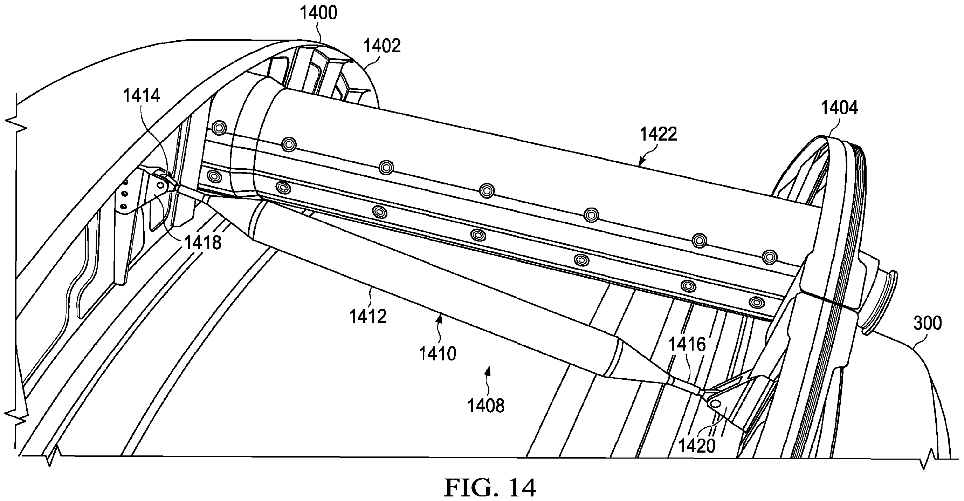

With reference now to Figure 14, another illustration of an inlet with a motion restrictor system is depicted in accordance with an advantageous embodiment. In this illustrative example, an exposed view of inlet 1400 is depicted. Inlet 1400 is an example of another implementation of inlet 110 in Figure 1 and may be used in place of inlet 218 in Figure 2.

As depicted, inlet 1400 has wall 1402 and wall 1404. Inlet 1400 is connected to fan case 300. In this illustrative example, a portion of motion restrictor system 1408 is depicted in this view. Motion restrictor system 1408 includes longitudinal member 1410.

In this illustrative example, longitudinal member 1410 takes the form of rod 1412. End 1414 of longitudinal member 1410 is connected to wall 1402, while end 1416 of longitudinal member 1410 is connected to fan case 300. End 1414 and end 1416 are tapered ends in this example. As depicted, end 1414 is connected to wall 1402 using connector system 1418.

End 1416 is connected to fan case 300 using connector system 1420. In these illustrative examples, connector system 1418 and connector system 1420 are lugs with pins. Additionally, longitudinal member 1422 is depicted and connects wall 1402 to wall 1404 in inlet 1400.

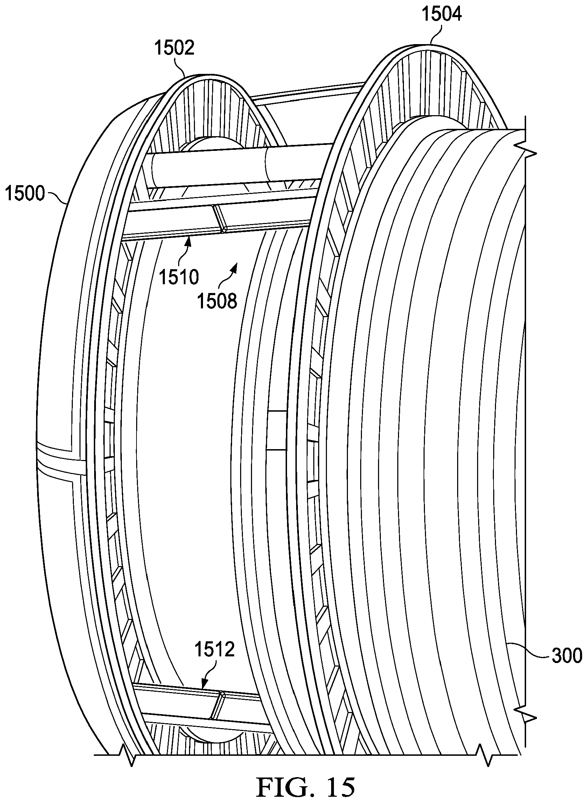

With reference now to Figure 15, an illustration of an inlet with a motion restrictor system is depicted in accordance with an advantageous embodiment. Inlet 1500 is another example of an implementation for inlet 110 in Figure 1. Inlet 1500 may be used in place of inlet 218 in Figure 2.

In this illustrative example, an exposed view of inlet 1500 is depicted. In this illustrative example, inlet 1500 has wall 1502 and wall 1504. Inlet 1500 is connected to fan case 300.

As depicted, a portion of motion restrictor system 1508 is shown. In this view of inlet 1500, longitudinal member 1510 and longitudinal member 1512 are seen within inlet 1500. Longitudinal member 1510 and longitudinal member 1512 connect wall 1502 of inlet 1500 to a structure in the form of fan case 300. In these illustrative examples, longitudinal member 1510 and longitudinal member 1512 take the form of substantially planar members. In particular, longitudinal member 1510 and longitudinal member 1512 may take the form of webs.

Thus, the different illustrations of motion restrictor systems used with inlets for aircraft engines in Figures 2-15 may reduce motion in the inlets. In particular, vibrations in walls of the inlets may be reduced. The illustrations of inlets and motion restrictor systems in these figures are not meant to imply physical or architectural limitations to the manner in which different motion restrictor systems may be implemented in accordance with an advantageous embodiment.

For example, longitudinal members have been shown in the form of I-beams, rods, and substantially planar members. Other types of longitudinal members may be used. For example, some longitudinal members may have a cross-section in the shape of a T, a triangle, a hexagon, and/or some other suitable open or closed shapes. Further, different types of longitudinal members may be used in the same motion restrictor system. For example, one motion restrictor system may include two longitudinal members in the form of I-beams and two longitudinal members in the form of rods.

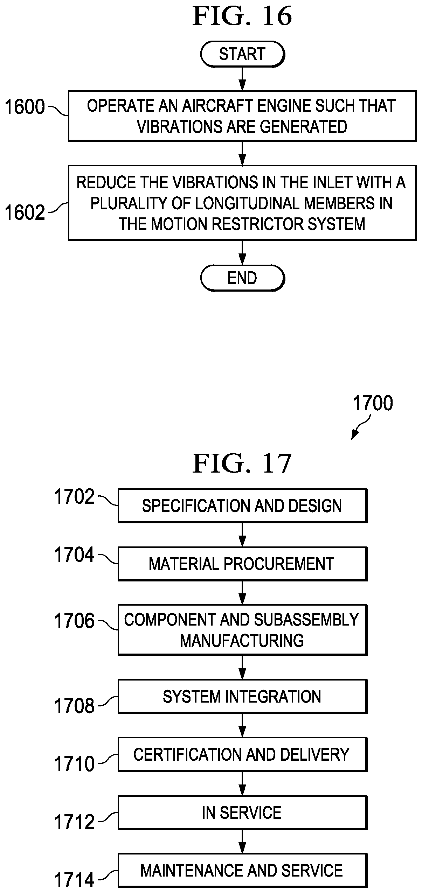

With reference now to Figure 16, a flowchart of a process for reducing vibrations in an inlet of an aircraft engine is depicted in accordance with an advantageous embodiment. In this illustrative example, motion restrictor system 106 may be implemented in aircraft engine 108.

The process begins by operating an aircraft engine such that vibrations are generated (operation 1600). Thereafter, the process reduces the vibrations in the inlet with a plurality of longitudinal members in the motion restrictor system (operation 1602), with the process terminating thereafter. This process may occur each time an aircraft engine is operated with motion restrictor system 106 installed in the inlet of the engine.

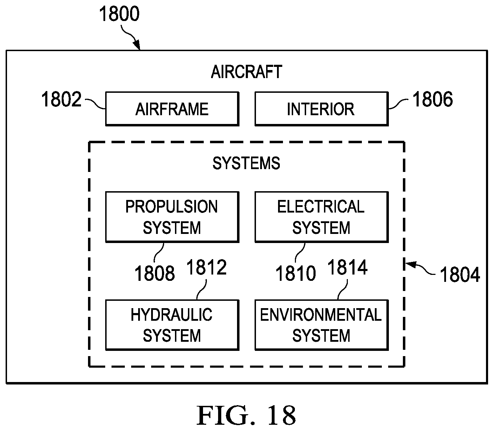

Advantageous embodiments of the disclosure may be described in the context of aircraft manufacturing and service method 1700 as shown in Figure 17 and aircraft 1800 as shown in Figure 18. Turning first to Figure 17, an illustration of an aircraft manufacturing and service method is depicted in accordance with an advantageous embodiment. During pre-production, aircraft manufacturing and service method 1700 may include specification and design 1702 of aircraft 1800 in Figure 18 and material procurement 1704.

During production, component and subassembly manufacturing 1706 and system integration 1708 of aircraft 1800 in Figure 18 takes place. Thereafter, aircraft 1800 in Figure 18 may go through certification and delivery 1710 in order to be placed in service 1712. While in service 1712 by a customer, aircraft 1800 in Figure 18 is scheduled for routine maintenance and service 1714, which may include modification, reconfiguration, refurbishment, and other maintenance or service.

Each of the processes of aircraft manufacturing and service method 1700 may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to Figure 18, an illustration of an aircraft is depicted in which an advantageous embodiment may be implemented. In this example, aircraft 1800 is produced by aircraft manufacturing and service method 1700 in Figure 17 and may include airframe 1802 with plurality of systems 1804 and interior 1806. Examples of systems 1804 include one or more of propulsion system 1808, electrical system 1810, hydraulic system 1812, and environmental system 1814. Any number of other systems may be included. Although an aerospace example is shown, different advantageous embodiments may be applied to other industries, such as the automotive industry.

Apparatuses and methods embodied herein may be employed during at least one of the stages of aircraft manufacturing and service method 1700 in Figure 17.

In one illustrative example, components or subassemblies produced in component and subassembly manufacturing 1706 in Figure 17 may be fabricated or manufactured in a manner similar to components or subassemblies produced while aircraft 1800 is in service 1712 in Figure 17. As yet another example, one or more apparatus embodiments, method embodiments, or a combination thereof may be utilized during production stages, such as component and subassembly manufacturing 1706 and system integration 1708 in Figure 17. One or more apparatus embodiments, method embodiments, or a combination thereof may be utilized while aircraft 1800 is in service 1712 and/or during maintenance and service 1714 in Figure 17. The use of a number of the different advantageous embodiments may substantially expedite the assembly of and/or reduce the cost of aircraft 1800.

For example, motion restrictor system 106 in Figure 1 may be added to inlets for aircraft 1800 during stages, such as component and subassembly manufacturing 1706 and/or during maintenance and service 1714. The use of motion restrictor system 106 may reduce maintenance for aircraft 1800. For example, inlets for aircraft 1800 may be replaced less frequently when using motion restrictor system 106.

The description of the different advantageous embodiments has been presented for purposes of illustration and description and is not intended to be exhaustive or limited to the embodiments in the form disclosed. Many modifications and variations will be apparent to those of ordinary skill in the art.

Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus comprising:
a first wall (122) for an inlet (110, 218, 220, 1200, 1400, 1500) of an aircraft engine (108, 214,216); a structure (114) for the aircraft engine;
a plurality of longitudinal members (120) connecting the first wall to the structure (114) for the aircraft engine,
**characterised in that** the plurality of longitudinal members has an orientation (130) configured to reduce motion (112, 116) in the first wall (122) for the inlet; and **in that** the motion reduced in the first wall (122) for the inlet is in an axial direction of the aircraft engine.

2. The apparatus of claim 1, wherein the plurality of longitudinal members (120) is connected to an upper section of the first wall (122) for the inlet (110, 218, 220, 1200, 1400, 1500).

3. The apparatus of claim 1, wherein the plurality of longitudinal members (120) has spacing that is substantially equal around a circumference around the inlet (110, 218, 220, 1200, 1400, 1500) of the aircraft engine (108, 214, 216).

4. The apparatus of claim 1, wherein the plurality of longitudinal members (120) is connected to a second wall (124) of the structure (114) for the aircraft engine (108, 214, 216).

5. The apparatus of claim 1, wherein the structure (114) is a source of the motion (112, 116).

6. The apparatus of claim 1, wherein the structure (114) is a fan case (118, 300) for the aircraft engine (108, 214, 216).

7. The apparatus of claim 1 further comprising:
a connector system (802) configured to connect an end (616) of a longitudinal member (602, 604, 606, 608) in the plurality of longitudinal members (120) to the structure (114).

8. The apparatus of claim 1, wherein the first wall (122) is a flange (702) for the inlet (110, 218, 220, 1200, 1400, 1500).

9. The apparatus of claim 1, wherein the plurality of longitudinal members (120) is from three longitudinal members to eight longitudinal members.

10. The apparatus of claim 1, wherein a longitudinal member (602, 604, 606, 608) is selected from one of an I-beam, a beam, a rod, a cylinder, a web, and a substantially planar member.

11. The apparatus of claim 1, wherein the plurality of longitudinal members (120) is comprised of a material selected from one of aluminum, steel, titanium, and a composite material.

12. The apparatus of claim 1, wherein the plurality of longitudinal members (120) has first ends ( 1414) connected to a wall (122) of the inlet (110, 218, 220, 1200, 1400, 1500) and second ends (1416) connected to a fan case (118, 300).

13. A method for reducing vibrations in an inlet (110, 218, 220, 1200, 1400, 1500) of an aircraft engine (108, 214, 216), the method comprising:
operating the aircraft engine such that the vibrations are generated;
reducing the vibrations in the inlet with a plurality of longitudinal members (120) connecting a first wall (122) of the inlet to a second wall (124) of a structure (114) for the aircraft engine, wherein the plurality of longitudinal members has an orientation configured to reduce the vibrations in the inlet;
and wherein the motion reduced in the inlet is in an axial direction of the aircraft engine.

14. The method of claim 14, wherein motion (112, 116) is reduced at the first wall (122) of the inlet (110, 218, 220, 1200, 1400, 1500).

## Patentansprüche

1. Vorrichtung, die Folgendes aufweist:
eine erste Wand (122) für einen Einlass (110, 218, 220, 1200, 1400, 1500) eines Flugzeugtriebwerks (108, 214,216);
eine Struktur (114) für das Flugzeugtriebwerk;
mehrere Längselemente (120), die die erste Wand mit der Struktur (114) für das Flugzeugtriebwerk verbinden,
**dadurch gekennzeichnet, dass** die mehreren Längselemente eine Ausrichtung (130) besitzen, die dafür konfiguriert ist, eine Bewegung (112, 116) in der ersten Wand (122) für den Einlass zu reduzieren; und
dadurch, dass die Bewegung, die in der ersten Wand (122) für den Einlass reduziert wird, in einer axialen Richtung des Flugzeugtriebwerks erfolgt.

2. Vorrichtung nach Anspruch 1, wobei die mehreren Längselemente (120) mit einem oberen Abschnitt der ersten Wand (122) für den Einlass (110, 218, 220, 1200, 1400, 1500) verbunden sind.

3. Vorrichtung nach Anspruch 1, wobei die mehreren Längselemente (120) eine Beabstandung aufweisen, die entlang eines Umfangs um den Einlass (110, 218, 220, 1200, 1400, 1500) des Flugzeugtriebwerks (108, 214, 216) herum im Wesentlichen gleich ist.

4. Vorrichtung nach Anspruch 1, wobei die mehreren Längselemente (120) mit einer zweiten Wand (124) der Struktur (114) für das Flugzeugtriebwerk (108, 214, 216) verbunden sind.

5. Vorrichtung nach Anspruch 1, wobei die Struktur (114) eine Quelle der Bewegung (112, 116) ist.

6. Vorrichtung nach Anspruch 1, wobei die Struktur (114) ein Gebläsegehäuse (118, 300) für das Flugzeugtriebwerk (108, 214, 216) ist.

7. Vorrichtung nach Anspruch 1, die des Weiteren aufweist: ein Verbindersystem (802), das dafür konfiguriert ist, ein Ende (616) eines Längselements (602, 604, 606, 608) in den mehreren Längselementen (120) mit der Struktur (114) zu verbinden.

8. Vorrichtung nach Anspruch 1, wobei die erste Wand (122) ein Flansch (702) für den Einlass (110, 218, 220, 1200, 1400, 1500) ist.

9. Vorrichtung nach Anspruch 1, wobei die Anzahl der mehreren Längselemente (120) von drei Längselementen bis acht Längselementen reicht.

10. Vorrichtung nach Anspruch 1, wobei ein Längselement (602, 604, 606, 608) unter einem von Folgendem ausgewählt ist: ein I-Träger, ein Träger, ein Stab, ein Zylinder, eine Bahn, und ein im Wesentlichen planares Element.

11. Vorrichtung nach Anspruch 1, wobei die mehreren Längselemente (120) aus einem Material bestehen, das ausgewählt ist unter einem von Aluminium, Stahl, Titan und einem Verbundmaterial.

12. Vorrichtung nach Anspruch 1, wobei die mehreren Längselemente (120) erste Enden (1414) aufweisen, die mit einer Wand (122) des Einlasses (110, 218, 220, 1200, 1400, 1500) verbunden sind, und zweite Enden (1416) aufweisen, die mit einem Gebläsegehäuse (118, 300) verbunden sind.

13. Verfahren zum Reduzieren von Vibrationen in einem Einlass (110, 218, 220, 1200, 1400, 1500) eines Flugzeugtriebwerks (108, 214, 216),wobei das Verfahren Folgendes umfasst:
Betreiben des Flugzeugtriebwerks dergestalt, dass die Vibrationen erzeugt werden;
Reduzieren der Vibrationen in dem Einlass mit mehreren Längselementen (120), die eine erste Wand (122) des Einlasses mit einer zweiten Wand (124) einer Struktur (114) für das Flugzeugtriebwerk verbinden,
wobei die mehreren Längselemente eine Ausrichtung aufweisen, die dafür konfiguriert ist, die Vibrationen in dem Einlass zu reduzieren, und
wobei die Bewegung, die in dem Einlass reduziert wird, in einer axialen Richtung des Flugzeugtriebwerks verläuft.

14. Verfahren nach Anspruch 14, wobei die Bewegung (112, 116) an der ersten Wand (122) des Einlasses (110, 218, 220, 1200, 1400, 1500) reduziert wird.

## Revendications

1. Un appareil comprenant :
une première paroi (122) pour une entrée (110, 218, 220, 1200, 1400, 1500) d'un moteur d'aéronef (108, 214, 216) ;
une structure (114) pour le moteur d'aéronef ;
une pluralité de membres longitudinaux (120) reliant la première paroi à la structure (114) pour le moteur d'aéronef,
**caractérisé en ce que** la pluralité de membres longitudinaux a une orientation (130) configurée pour réduire le mouvement (112, 116) dans la première paroi (122) pour l'entrée ; et **en ce que** le mouvement réduit dans la première paroi (122) pour l'entrée est dans une direction axiale du moteur d'aéronef.

2. L'appareil de la revendication 1, dans lequel la pluralité de membres longitudinaux (120) est reliée à une section supérieure de la première paroi (122) pour l'entrée (110, 218, 220, 1200, 1400, 1 500).

3. L'appareil de la revendication 1, dans lequel la pluralité de membres longitudinaux (120) a un espacement qui est sensiblement égal autour d'une circonférence autour de l'entrée (110, 218, 220, 1200, 1400, 1500) du moteur d'aéronef (108, 214, 216).

4. L'appareil de la revendication 1, dans lequel la pluralité de membres longitudinaux (120) est reliée à une seconde paroi (124) de la structure (114) pour le moteur d'aéronef (108, 214, 216).

5. L'appareil de la revendication 1, dans lequel la structure (114) est une source du mouvement (112, 116).

6. Appareil de la revendication 1, dans lequel la structure (114) est un boîtier de ventilateur (118, 300) pour le moteur d'aéronef (108, 214, 216).

7. L'appareil de la revendication 1 comprenant en outre :
un système de connecteur (802) configuré pour connecter une extrémité (616) d'un membre longitudinal (602, 604, 606, 608) dans la pluralité de membres longitudinaux (120) à la structure (114).

8. L'appareil de la revendication 1, dans lequel la première paroi (122) est une bride (702) pour l'entrée (110, 218, 220, 1200, 1400, 1500).

9. L'appareil de la revendication 1, dans lequel la pluralité de membres longitudinaux est de trois éléments longitudinaux à huit éléments longitudinaux.

10. L'appareil de la revendication 1, dans lequel un membre longitudinal (602, 604, 606, 608) est sélectionné parmi l'un d'un faisceau en I, d'un faisceau, d'une tige, d'un cylindre, d'une bande, et d'un élément sensiblement planaire.

11. L'appareil de la revendication 1, dans lequel la pluralité d'éléments longitudinaux (120) est constituée d'un matériau sélectionné parmi l'aluminium, l'acier, le titane et un matériau composite.

12. L'appareil de la revendication 1, dans lequel la pluralité de membres longitudinaux (120) a de premières extrémités (1414) reliées à une paroi (1 22) de l'entrée (110, 218, 220, 1200, 1400, 1500) et de secondes extrémités (1416) reliées à un boîtier de ventilateur (11 8, 300).

13. Une méthode pour réduire les vibrations dans une entrée (110, 218, 220, 1200, 1400, 1 500) d'un moteur d'aéronef (108, 214, 216), la méthode comprenant :
le fonctionnement du moteur d'aéronef de telle sorte que les vibrations soient générées ;
la réduction des vibrations dans l'entrée au moyen d'une pluralité de membres longitudinaux (120) reliant une première paroi (122) de l'entrée à une seconde paroi (124) d'une structure (114) pour le moteur d'aéronef, dans lequel la pluralité de membres longitudinaux a une orientation configurée pour réduire les vibrations dans l'entrée ;
et où le mouvement réduit dans l'entrée est dans une direction axiale du moteur d'aéronef.

14. La méthode de la revendication 13, dans laquelle le mouvement (112, 116) est réduit à la première paroi (122) de l'entrée (110, 218, 220, 1200, 1400, 1500).
